# EUROPÄISCHE PATENTSCHRIFT

(11) **EP 3 951 425 B1**
(45) Veröffentlichungstag und Bekanntmachung des Hinweises auf die Patenterteilung: **02.09.2026**
(21) Anmeldenummer: 21187133.0
(22) Anmeldetag: 22.07.2021
(51) Int. Cl.: G01S 7/4865, G01S 17/08, G01S 17/10

(54) **VERFAHREN SOWIE MESSVORRICHTUNG ZUR BESTIMMUNG EINER DISTANZ**
METHOD AND MEASURING DEVICE FOR DETERMINING A DISTANCE
PROCÉDÉ, AINSI QUE DISPOSITIF DE MESURE PERMETTANT DE DÉTERMINER UNE DISTANCE

(30) Priorität: 07.08.2020 DE 102020120858
(43) Veröffentlichungstag der Anmeldung: 09.02.2022
(73) Patentinhaber: wenglor sensoric elektronische Geräte GmbH, 88069 Tettnang (DE)
(72) Erfinder: Wolff, Nikolai, 88250 Weingarten (DE)
(74) Vertreter: Christ, Niko

(56) Entgegenhaltungen:
- US-B1- 8 947 659
- US-B2- 9 874 629

## Beschreibung

Die Erfindung bezieht sich auf ein Verfahren zur Bestimmung einer Distanz zwischen der Messvorrichtung und einem Objekt mittels der Lichtlaufzeitmessung nach dem Oberbegriff des Anspruchs 1.

Ein solches Messverfahren ist bereits aus der US 9,874,629 B2 vorbekannt. Allerdings handelt es sich bei dem dort beschriebenen Verfahren um eine Lösung, bei der nach dem Aussenden eines Lichtimpulses eine Empfangsdiode nur für ein kurzes Zeitfenster auf Empfang ist und ein Auslösen der Empfangsdiode, welche mit einem Schwellenwert verknüpft ist, die Auswertung beendet. Hierdurch kann grundsätzlich nur ein Objekt detektiert werden.

Weiter ist die US 8,947,659 B1 vorbekannt, welche allerdings ebenfalls mit einem Zeitfenster arbeitet, von einem Triggersignal eines Lasers bis hin zu dem Empfang einer Reflexion des Lasersignals. Auch dies erlaubt keine Mehrfachdetektion von Objekten.

Bei derartigen Messverfahren handelt es sich um eine Lichtlaufzeitmessung, die nach der physikalischen Formel s = c x t die Wegstrecke s errechnet, wenn die Zeitspanne t gemessen ist, die Lichtwellen zwischen der Messvorrichtung und dem Objekt benötigen. Solche Messvorrichtungen bestehen aus einem Lichtwellen abstrahlenden Lichtsensor oder einer Sendediode und einer Empfangsdiode. Ein in einem Überwachungsbereich eintauchendes Objekt reflektiert dabei den von der Sendediode abgestrahlten Lichtimpuls zurück zur Empfangsdiode und die Messvorrichtung, die einen Zeit-Digital-Konverter TDC (Time-to-Digital-Converter) umfasst, startet die Zeitmessung, sobald ein einzelner Lichtimpuls von der Sendediode in den Überwachungsbereich abgestrahlt ist und beendet die Zeitmessung, sobald der reflektierte Lichtimpuls von dem Objekt an die Empfangsdiode zurückgestrahlt ist. Der Konverter kann daher als elektronische Zeitmessschaltung verstanden werden.

Bei der Empfangsdiode handelt es sich zum Beispiel um eine APD (Photon Avalanche Diode) mit einem sogenannten Avalanche-Effekt, d. h. die APD Photodiode hat eine innere Verstärkung, die über der Betriebsspannung einstellbar ist und bis zu einem maximalen Faktor 100 erhöht werden kann.

Da von einem Objekt mit einer dunklen oder schwach reflektierenden Oberfläche, das möglicherweise in einer weit entfernten Distanz bis zu 100 m von der Messvorrichtung bzw. der Empfangsdiode entfernt angeordnet ist, gelangen sehr wenige Photonen des Lichtimpulses zur Empfangsdiode zurück. Daher ist ein erheblicher Aufwand an Nachverstärkung notwendig, um den Empfangsimpuls überhaupt zu einem ausführbaren Spannungsimpuls zu wandeln.

Demnach basieren derzeitige Empfangsdioden zur Verstärkung der Spannungsimpulse aus einem SPAD (Single-Photon Avalanche Diode). Diese Empfangsdioden bestehen aus einer Vielzahl von einzelnen kleinen APD Diodenpixeln, die in einem Raster angeordnet und einer gemeinsamen Betriebsspannung oberhalb der Durchbruchspannung im sogenannten Geiger-Modus betrieben sind. Im Geiger-Modus reicht ein Photon, um das APD Einzelpixel komplett mit Elektronen zu fluten, sodass ein einzelnes Photon bereits einen messbaren Spannungsimpuls am Ausgang verursacht.

Hierbei handelt es sich folglich um sogenannte Einzelphotonenzähler. Ein einzelnes APD Pixel stellt ein rein digitales Arbeitsprinzip dar, das hochohmig oder durch- gezündet ist. Der Fotostrom der gesamten Empfangsdiode SPAD mit einer Vielzahl von Einzeldioden liefert ein analoges Spannungssignal, wenn eine genügend hohe Anzahl von Einzeldioden sich im nicht gezündeten Zustand befinden. Demnach weist die SPAD Empfangsdiode eine sehr hohe innere Verstärkung von bis zu einem Faktor 10 ^ 6 auf. Dadurch ist zum Betrieb einer solchen Empfangsdiode lediglich eine einfache, kostengünstige Verstärkungsschaltung erforderlich, um beispielsweise Objekte mit einer dunklen Oberfläche, die zudem in einem großen Messabstand angeordnet sind, erkennen zu können.

Der Nachteil solcher SPAD Empfangsdioden besteht jedoch darin, dass Streulicht oder Störlicht, verursacht durch Nebel oder transparente Bauteile, vereinzelte Messimpulse liefern, die zu sogenannten Dark Counts führen und daher die Messergebnisse verfälschen. Zudem können bei der Zeitmessung Fehlauslösungen entstehen.

Um solche Fehlauslösungen zu vermeiden und eine präzise Erkennung des Empfangsimpulses zu ermöglichen, benutzt die Auswertung ein Histogrammverfahren. Dazu werden eine Vielzahl von Lichtimpulsen ausgesendet und die Ergebnisse der jeweiligen Zeitmessungen in einem solchen Histogramm angeordnet. Die ungewollten rein statischen Fehlmessungen erzeugen im Histogramm ein abfallendes Grundrauschen, auf dem das reale Empfangssignal durch einen überlagerten Impuls sichtbar wird. Dieser Impuls kann dann ermittelt und für die Abstandsberechnung herangezogen werden.

Durch die Offenbarung der DE 10 2017 113 674 B4 ist beschrieben, dass ein Histogramm erstellt ist, vor und nach dem Eingang des Empfangsimpulses. Aus diesem Stand der Technik ist nämlich ersichtlich, dass die Sendeimpulse nach der physikalisch bekannten Lichtlaufzeitberechnung, die von einem in einem Überwachungsbereich eingetretenen Objekt reflektiert sind, an einer Empfangsdiode, die aus einer Vielzahl von Pixeln, insbesondere als Avalanche Photo Diode besteht, erfasst sind. Diese vereinzelten Empfangsimpulse werden somit als Anzahl von Einzelpixeln erfasst. Die durch den Empfangsimpuls erfassten Einzelpixel der Empfangsdiode werden nach dem Empfang des Lichtimpulses nicht mehr im Grundrauschen berücksichtigt. Aus dem Höhenunterschied im Grundrauschen vor und nach dem Empfangsimpuls kann abgeleitet werden, in welcher Größenordnung die Lichtintensität des Empfangsimpulses zu diesem Zeitpunkt gewesen ist. Eine solche Auswertung kann für die Kompensation von Messfehlern herangezogen werden.

Nachteiliger Weise kann ein solches Messverfahren nicht dazu verwendet werden, dass zum einen mehrere Objekte in den Überwachungsbereich mit unterschiedlichen Distanzen zu der Messvorrichtung bzw. der Empfangsdiode der Messvorrichtung erfasst werden können und zum anderen können Umwelteinflüsse, beispielsweise Luftfeuchtigkeit wie Nebel oder eine im Überwachungsbereich angeordnete Glasplatte zu unvorhergesehenen Messfehlern führen, die von dieser Messvorrichtung bzw. der damit zugrunde liegenden Messverfahren nicht berücksichtigt sind. Demnach entstehen bei solchen Messverfahren erhebliche Messfehler.

Darüber hinaus ist nachteilig, dass Objekte in einer größeren Entfernung zwar vereinzelte Lichtimpulse reflektieren, die von den Pixeln der Empfangsdiode erfasst sind, eine solche Anzahl von Pixeln führt jedoch zu einer fehlerbehafteten Auswertung, da die Anzahl der erfassten Pixel zu gering ist.

Durch die DE 10 2017 220 774 A1 ist ein Verfahren beschrieben, bei dem ein erstes Histogramm gebildet ist. Dabei beginnt die Zeitmessung jeweils vom Zeitpunkt null, also mit dem Abstrahlen der Sendeimpulse. Dieses Histogramm ist anschließend durch das bekannt gewordene Verfahren auszuwerten und es wird zunächst der Zeitpunkt des Empfangsimpulses aus dem ersten Histogramm näherungsweise ermittelt. Anschließend soll dieses bekannt gewordene Verfahren ein zweites Histogramm erstellen, bei dem die Zeitmessung verzögert gestartet ist. Es wird nämlich das zweite Histogramm mit einem Zeitpunkt unmittelbar vor dem Empfangsimpuls gestartet und in dieses werden ausschließlich Messergebnisse eingestellt, die unmittelbar vor dem gesuchten Empfangsimpuls bis zu einem Zeitpunkt unmittelbar nach dem Empfangsimpuls erfasst sind. Aufgrund des verzögerten Startzeitpunktes der Zeitmessung beinhaltet das zweite Histogramm ausschließlich derjenigen Informationen, die für den eigentlichen Empfangsimpuls maßgeblich sind. Ein solcher Empfangsimpuls kann dadurch präziser berechnet werden. In einem weiteren dritten Histogramm sind ausschließlich die entsprechenden Messergebnisse der ersten und zweiten Histogramme bis zum Start des jeweiligen zweiten dieser Histogramme aufgezeichnet bzw. enthalten. Folglich ist ausschließlich das Grundrauschen der Empfangsdiode erfasst und mit dem Ergebnis der entsprechenden Auswertungen der Histogramme eine Fehlerkompensation durchgeführt.

Nachteiliger Weise kann ein solches Messverfahren die Distanz von Objekten im Nahbereich der Empfangsdiode nicht zuverlässig erfassen, da die Reflexionseigenschaften solche Objekte oftmals zu hoch sind, sodass entsprechende Lichtimpulse an den einzelnen Pixeln der Empfangsdiode entstehen, durch die entsprechende Messfehler auftreten oder die Pixel unbestimmt sind und für eine bestimmte Zeitspanne nicht funktionieren.

Die auf ein oder mehrere Histogramme beruhende Messverfahren, weisen jedoch mehrere Nachteile auf. Bei hohem Fremdlichtanteil sind viele APD Einzelpixel gezündet, sodass bei einem weit entfernten Objekt die meisten Pixel bereits vor dem eigentlichen Empfangsimpuls gezündet sind und deswegen sich dieser ausschließlich noch schwach im Histogramm wiederfindet. Zudem sind Objekte mit einer diffusen Oberfläche, die im Nahbereich der Empfangsdiode angeordnet sind, insbesondere bei Nebel oder Dampfumgebungen störend, sodass im Histogramm über einen weiten Bereich das Grundrauschen erheblich vergrößert ist und folglich der Empfangsimpuls von dem Objekt in großer Entfernung nicht oder lediglich schwach im Histogramm sichtbar ist.

Es ist daher Aufgabe der Erfindung, ein Verfahren zur Durchführung des Verfahrens zur Bestimmung einer Distanz zwischen der Messvorrichtung und einem Objekt in einem Überwachungsbereich der eingangs genannten Gattungen zur Verfügung zu stellen, durch die zum einen die Distanzen von mehreren Objekten, die in den Überwachungsbereich eingetaucht sind ohne Messfehler zu bestimmen, und zum anderen sollen Umwelteinflüsse, beispielsweise Nebel oder im Strahlengang der Lichtimpulse angeordnete transparente Gegenstände, beispielsweise Glasplatten, das Messergebnis nicht beeinflussen. Vielmehr soll ein zuverlässiges Messergebnis der Distanzen zwischen mehreren Objekten und der Messvorrichtung vorliegen.

Diese Aufgabe ist durch die Merkmale des kennzeichnenden Teils von Patentanspruch 1 gelöst.

Weitere vorteilhafte Weiterbildungen der Erfindung ergeben sich aus den Unteransprüchen.

Durch den Gegenstand nach Anspruch 1 ist eine zuverlässige Distanzbestimmung zwischen der Messvorrichtung und einem Objekt, unabhängig von der Anzahl der in den Überwachungsbereich vorhandenen Objekte und/oder bestimmten Umwelt- und/oder Sichteinflüsse, wie beispielsweise Glasplatten, innerhalb des Strahlenganges der abgestrahlten und reflektierten Lichtimpulse erreicht.

Aufgrund der verwendeten mathematischen Folge mit vielen Einzelmessungen je Zahl n beginnend mit n = 0 bis zu einem Endwert für n > 3 ergibt sich ein Histogramm, bei dem die Messergebnisse für den Nahbereich geringer bewertet werden und sich die Anzahl der Messergebnisse mit immer später beginnender Zeitmessung bei Erhöhung der Zahl n mit dem Messabstand permanent erhöht, sodass mehrere Objekte, die im Überwachungsbereich vorhanden sind, durch die Auswertung des Histogramms erfasst werden können.

Zudem ist es möglich, Objekte im Nahbereich der Messvorrichtung und im weiter entfernten Messbereich zu unterscheiden und Störeinflüsse im Nahbereich durch die Auswertung des Histogramms zu ignorieren. Darüber hinaus können Glasscheiben oder sonstige transparente Abdeckungen, die zwischen der Sendediode und der Empfangsdiode möglicherweise angeordnet sind, durch die Auswertung des Histogramms erkannt werden, sodass deren Lichtreflexionen oder sonstige Brechungen von Lichtwellen ignoriert bzw. ausgeschlossen werden können. Auch Nebel oder sonstige Staubpartikel, die in dem Überwachungsbereich vorhanden sind, können durch die Auswertung des derart erstellten Histogramms unberücksichtigt bleiben, sodass diese die Messergebnisse nicht verfälschen.

Ergänzend zur Erhöhung des Startzeitpunktes der Zeitmessung im Konverter für die Vielzahl der Einzelmessungen bei der Zahl n kann beispielsweise die Intensität der Lichtimpulse durch eine entsprechende Ansteuerung der Sendediode mit jeder Erhöhung von der Zahl n verstärkt werden, so dass die Empfindlichkeit der Objekterkennung sich vergrößert, je weiter die Distanz des Objekts ermittelt ist. Darüber hinaus kann wahlweise zusätzlich die Komparator-Schwelle mit jeder Erhöhung der Zahl n angepasst werden, um de Empfindlichkeit zu vergrößern, je weiter das Objekt entfernt ist. Alternativ können diese beiden Maßnahmen individuell oder gemeinsam erfolgen.

Durch eine entsprechende Programmierung des Konverters als Bestandteil der erfindungsgemäßen Messvorrichtung kann die entsprechende Abarbeitung der mathematischen Folge eingestellt und vorgegeben sein.

In der Zeichnung ist beispielhaft eine elektrische Schaltung für eine Messvorrichtung sowie für die Durchführung des Messverfahrens zu entnehmen, die nachfolgend näher erläutert sind. Im Einzelnen zeigt:
- Figur 1: eine elektrische Schaltung zur Bestimmung der Distanz zwischen einem Objekt innerhalb eines Überwachungsbereichs der Messvorrichtung, die aus einer Sendediode und einer Empfangsdiode besteht, durch die die Laufzeit der einzelnen Lichtimpulse mithilfe eines Konverters gemessen ist und einer schematischen Abbildung zur Erstellung eines Histogramms für jeden der derart erstellten Messzyklen und deren Auswertung,
- Figur 2: ein Zähldiagramm, durch das innerhalb eines vorgegebenen Messzyklus die einzelnen Messergebnisse in dem Histogramm hinterlegt sind, mit einem ersten und einem zweiten Objekt und
- Figur 3: ein Diagramm gemäß Figur 2, mit einem nachfolgenden Messzyklus, bei einem geänderten Abstand für das zweite Objekt.

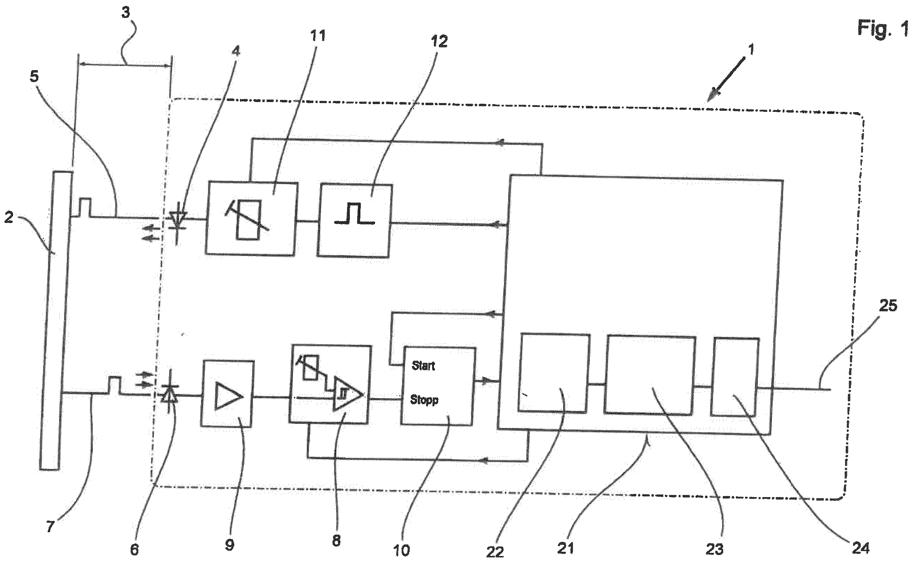

In Figur 1 ist eine Messvorrichtung schematisch als elektrische Schaltung 1 zu entnehmen, durch die die Distanz D zwischen der Messvorrichtung 1 und einem in einem Überwachungsbereich 3 eingetauchten Objekt 2 erfasst und ausgewertet sein soll.

Die Messvorrichtung 1 umfasst eine Sendediode 4, durch die vereinzelt Lichtimpulse 5 in den Überwachungsbereich 3, also in Richtung des Objektes 2, abgestrahlt sind. Die Oberfläche des jeweiligen Objektes 2 reflektiert die abgestrahlten Lichtimpulse 5 in Richtung einer der Messvorrichtung 1 zugeordneten Empfangsdioden 6, durch die die reflektierten Lichtimpulse 7 erfasst sind. Die Sendediode 4 strahlt üblicherweise Laserlichtwellen ab und die Empfangsdiode 6 besteht aus einer sogenannten SPAD Diode, die eine Vielzahl von vereinzelten APD Dioden aufweist. Jede der APD Dioden kann ein reflektiertes Lichtpixel feststellen.

Die Sendediode 4 ist mit einem Leistungsteiler 11 und einem Pulserzeuger 12 elektrisch verbunden, die der Sendediode 4 vorgeschaltet sind. Die Empfangsdiode 6 ist elektrisch mit einem Verstärker 9, einem Komparator 8, und einem Zeit-Digital-Konverter TDC (Time to Digital Converter) 10 gekoppelt. Der Konverter 10 wird durch ein Start- bzw. Stoppsignal gesteuert und ist mit dem Komparator 8 und der Steuer- und Recheneinheit 21 der Sendediode 4 elektrisch verbunden. Sobald die Steuer- und Recheneinheit 21 ein Aktivierungssignal an die Sendediode 4 leitet, strahlt diese einen ersten vereinzelten Lichtimpuls 5 in den Überwachungsbereich 3, also in Richtung des Objektes 2, ab. Die weiteren abgestrahlten Lichtimpulse sind ebenso mit der Bezugsziffer 5 gekennzeichnet.

Die Oberfläche des Objektes 2 reflektiert die abgestrahlten Lichtimpulse 5 in Richtung der Empfangsdiode 6, deren einzelne APD Dioden Pixel als Spannungsimpulse erzeugen, die als Stoppsignal an den Konverter 10 weitergeleitet sind. Sobald der Konverter 10 solche Messsignale erhält, wird die Zeit gestoppt und über die bekannte physikalische Formel s = c * t kann dann die Distanz D, die zwischen der Messvorrichtung 1 und dem Objekt 2 für das Abstrahlen und Reflektieren der Lichtimpulse 5, 7 benötigt wurde, ausgewertet sein. Dem Konverter 10 ist eine Steuer- und Recheneinheit 21 nachgeschaltet, an die diese Messsignale weitergeleitet sind.

Die Steuer- und Recheneinheit 21 umfasst einen Akkumulator 22, eine Mastersoftware Datenbank 23 und einen Prozessor 24 zur Laufzeitberechnung. Die einzelnen Messergebnisse werden von dem Prozessor 24 in Form eines Histogramms erfasst und in der Datenbank abgelegt und anschließend durch diesen ausgewertet. Sobald die Auswertung des Histogramms durch den Prozessor 24 abgeschlossen ist, erzeugt dieser ein Ausgangssignal 25, das in unmittelbarem Zusammenhang mit der Distanz D zwischen der Messvorrichtung 1 und dem Objekt 2 steht.

Die Steuer- und Recheneinheit 21 veranlasst durch den Pulserzeuger 12, die Sendediode 4 mit einer im Leistungsteller 11 festgelegten Leistung, Lichtimpulse 5 zu erzeugen. Diese Lichtimpulse 5 bestimmen jeweils den Startzeitpunkt tₛ. Das Empfangssignal der Empfangsdiode 6 wird durch den Verstärker 9 verstärkt und mit dem Komparator 8 zu einem Stoppsignal gewandelt. Die Komparator Empfindlichkeit ist durch die Steuer- und Recheneinheit 21 einstellbar. Das Stoppsignal beendet die Zeitmessung im Zeit-Digital-Konverter oder time-digital-converter 10. Der Beginn der Zeitmessung im Konverter 10 erfolgt durch das Startsignal von der Steuer- und Recheneinheit 21, das sich nach der Folge tₛ + n x Δ t, beginnend mit n = 0 berechnet. Für jede Zahl n wird eine konstante Zahl von Einzelmessungen, üblicherweise 100 bis 1000 Einzelmessungen durchgeführt und dann anschließend die gleiche Anzahl Einzelmessungen mit der nächsten Zahl n solange, bis der Endwert für n erreicht ist, wobei der Endwert eine natürliche Zahl von mindestens 4 ist. Die Ergebnisse der Zeitmessungen werden in einem Histogramm eingetragen, wobei zu den jeweiligen Ergebnissen von dem Eintrag in das Histogramm, der Betrag der Startverzögerung n x Δ t wieder aufaddiert wird, so dass im Histogramm der Eintrag für ein Messobjekt in einem bestimmten Abstand unabhängig von der Zahl n an dem gleichen Zeitpunkt erfolgt.

Die maximale Zeitverzögerung entspricht dabei der Anzahl der Zeitverzögerungen und bestimmt sich aus den maximalen Messabstand, also der maximalen Signallaufzeit. Bei einem maximalen Distanz D von 100 m und einer Zeitverzögerung von Δ t = 6,6 ns, erhöht sich n maximal auf den Endwert von 99. Die derart erzeugten Einzelmessungen sind in dem Histogramm zusammengefasst, das aus der Vielzahl von Einzelmessungen mit den unterschiedlichen Startzeitpunkten besteht. Der Konverter 10 ist also mit der mathematischen Folge tₛ + n x Δ t gesteuert, wobei tₛ der Startzeitpunkt für die abgestrahlten Lichtimpulse 5 ist; n eine natürliche Zahl zwischen
0 und 1 und mindestens vier und Δ t der Beginn der Zeitverzögerung um den Startzeitpunkt der Zeitmessung des Konverters 10 verzögert ist.

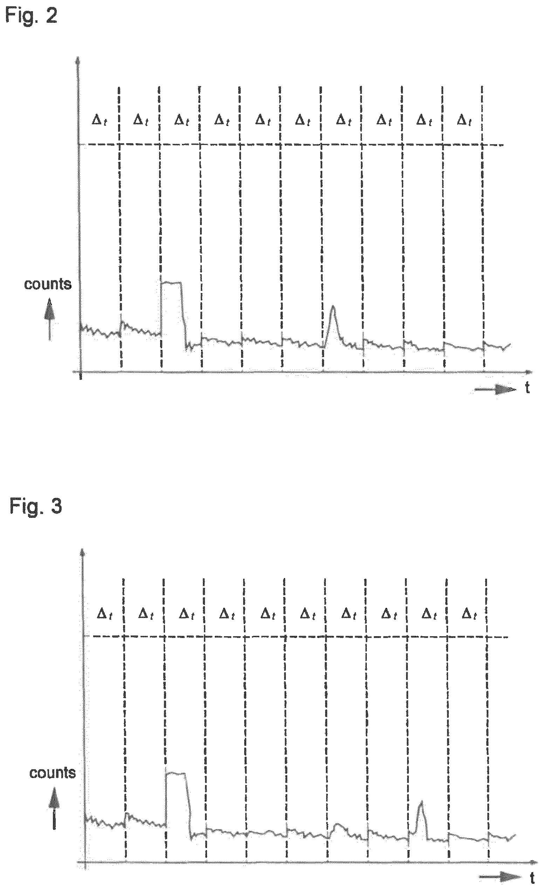

Folglich erhöht sich durch dieses erfindungsgemäße Mess- und Berechnungsverfahren die Anzahl der Einzelmessungen in den vorgegebenen Abstufungen Δ t, die in Abhängigkeit von der Signallaufzeit liegen. Dies bedeutet, dass Objekte 2 im Nahbereich der Messvorrichtung 1 im Histogramm mit wenigen Messungen abgebildet sind, Objekte 2, die in einem weit entfernten Abstand von der Messvorrichtung 1 angeordnet sind, werden dagegen mit mehr Messungen wiedergegeben, und zwar je weiter weg ein Objekt 2 angeordnet ist desto höher ist die Anzahl der Messergebnisse in dem Histogramm. Das Grundrauschen im Histogramm ist dadurch im Nahbereich reduziert, die Empfindlichkeit für das zu erkennende Objekt 2 erhöht sich dagegen je weiter weg dieses Objekt 2 von der Messevorrichtung 1 entfernt ist. Dies kann beispielsweise den Figuren 2 und 3 entnommen werden.

Verstärktes Rauschen durch Fremdlicht oder durch ein diffuses Objekt oder durch Nebel im Nahbereich sind dadurch erheblich reduziert, da die Empfindlichkeit im Histogramm entsprechend abgebildet ist. Das Signal von einer Glasscheibe oder einer störenden Objektkante, an der vorbei eine Messung im Hintergrund erfolgen soll, ist ebenso mit reduzierter Empfindlichkeit im Histogramm abgebildet.

Zu erkennen ist in den Figuren 2 und 3 zudem, dass der schwache Impuls von Objekten 2 im Hintergrund dadurch deutlicher abgebildet wird als bei den bekannt gewordenen Messverfahren. Ebenso kann den Figuren 2 und 3 entnommen werden, dass das Signal von einem ersten Objekt 2 im Nahbereich, zum Beispiel eine Glasscheibe, durch die hindurch ein zweites Objekt 2 erkannt werden soll, unempfindlicher abgebildet ist. Das Problem, dass dieses erste Objekt 2 so intensiv als Messpunkt festgestellt ist, dass der Verstärker 9 für viele Nanosekunden geblendet wird und dadurch keine Messwerte liefert, ist nach wie vor gegeben. Um diesen Effekt zu reduzieren, besteht jedoch die Möglichkeit, dass bei jeder Verschiebung des Startzeitpunktes für den Konverter auf den nächsten Wert, eine Anpassung dieser Lasersendeleistung an der Sendediode 4 vorgenommen ist, sodass Objekte 2 im Nahbereich mit niedriger Sendeimpulsleistung gemessen sind und Objekte 2, die weiter entfernt sind, mit hoher Sendeleistung angestrahlt werden. Dadurch, dass die Anzahl der Einzelmessungen, die mit dem Konverter 10 und dem Startzeitpunkt
tₛ + 0 x Δ t oder kleinere Werte tₛ + n x Δ t mit geringer Laserleistung durchgeführt sind, ist der Eingangsverstärker 9 durch ein erstes Objekt 2, beispielsweise der Glasscheibe, nicht oder reduziert übersteuert, sodass das zweite Objekt 2 mit höherer Signalstärke im Histogramm hinter dem ersten Objekt sichtbar ist.

Demnach können mehrere Objekte 2, die im Überwachungsbereich 3 angeordnet sind, entsprechend erfasst und derart ausgewertet sein, dass entweder die jeweiligen Distanzen D der Objekte 2 unterschiedlich berechnet sind oder dass die Objekte 2 im Nahbereich als Glasscheibe oder dergleichen erkannt werden und somit die Messungen nicht beeinflussen.

Es ist auch möglich die Komparatorschwelle des Komparators 8 zu verändern, um nach dem Verstärker 9 das analoge Messsignal in ein digitales Stoppsignal für den Konverter 10 zu wandeln. Mit jeder Erhöhung des Startzeitpunktes ist demnach der der Komparator 8 empfindlicher gestellt. Fakultativ können die Maßnahmen zur Erhöhung oder Reduzierung der Laserlichtidentität und der Empfindlichkeitsregelung an dem Komparator 8 vereinzelt oder gemeinsam durchgeführt werden.

In den Figuren 2 und 3 sind zwei nachfolgende Messzyklen abgebildet. Die entsprechenden Störeinflüsse sind beispielsweise im Messzyklus 2 gemäß Figur 2 und im Messzyklus 4 gemäß Figur 3 dargestellt. Der tatsächliche zu interessierende Messwert ist in Figur 2 zu einem früheren Zeitpunkt erfasst als in Figur 3.

## Patentansprüche

1. Verfahren zur Bestimmung einer Distanz (D) zwischen einer Messvorrichtung (1) mit einer Sendediode (4) und einer Empfangsdiode (6) in Form einer SPAD-Diode, die eine Vielzahl von vereinzelten APD-Dioden aufweist, und einem Objekt (2) mittels der Lichtlaufzeitmessung,
wobei das Verfahren die folgenden Schritte aufweist:
- Aussenden von Lichtimpulsen (5) durch die Sendediode (4) in einen Überwachungsbereich (3),
- Empfangen von dem Objekt (5) reflektierter Lichtimpulse (7) durch die Empfangsdiode (6),
- Erstellen eines Histogramms als Verlauf gezählter empfangener reflektierter Lichtimpulse über der Zeit mithilfe eines Prozessors (24) der Messvorrichtung (1), wobei in das Histogramm eine Vielzahl von Messwerten eingelesen wird, die innerhalb eines vorgegebenen Messzyklus durch die Empfangsdiode (6) erfasst werden, **gekennzeichnet durch** die weiteren Verfahrensschritte,
- Aussenden einer Vielzahl von Lichtimpulsen (5) unter einer konstanten Erhöhung des jeweiligen Startzeitpunktes t_{z} der Zeitmessung in einem Zeit-Digital-Konverter (10) nach der mathematischen Folge t_{z} = tₛ + n x Δ t, wobei tₛ der Zeitpunkt des Aussendens des Lichtimpulses (5), n eine natürliche Zahl, die beginnend bei Null bis zu einem vorgegebenen Endwert, der mindestens 4 ist und Δ t der Betrag der Zeitverzögerung, um den der Startzeitpunkt (t_{z}) der Zeitmessung des Konverters (10) jeweils verzögert ist, wobei für jede Zahl n eine Vielzahl von Lichtimpulsen (5) ausgestrahlt und Empfangsimpulse (7) erfasst werden und das Zeitmessergebnis des Konverters (10) um den fehlenden Zeitbetrag n x Δ t verändert ist,
- Ablegen der erhaltenen Messwerte eines derartigen Messzyklus in dem Histogramm und
- Auswerten des Histogramms nach dem abgeschlossenen Messzyklus in Abhängigkeit von der Distanz (D) zwischen dem Startzeitpunkt (tₛ) der abgestrahlten Lichtimpulse (5) und deren Messzeitpunkten an der Empfangsdiode (6), wobei die Distanz zwischen der Messvorrichtung und einem in dem Histogramm abgebildeten Objekt nach der Formel c x t berechnet wird.

2. Verfahren nach Anspruch 1,
**dadurch gekennzeichnet,**
**dass** durch die Auswertung des Histogramms die Distanzen (D) von mehreren in dem Überwachungsbereich (3) vorhandenen Objekten (2) bestimmt werden, und durch das Verfahren erzeugte Histogramm die Messergebnisse für den Nahbereich geringer bewertet werden.

3. Verfahren nach Anspruch 1,
**dadurch gekennzeichnet,**
**dass** die Intensität der abgestrahlten Lichtimpulse (5) an der Sendediode (4), die in einer Anzahl der Einzelmessungen bei konstanter Zahl n abgestrahlt sind, in Abhängigkeit von den Messwerten des Messzyklus einstellbar bzw. regulierbar ist, derart, dass die Distanz (D) des jeweiligen Objektes (2) und/oder dessen Reflexionseigenschaften und/oder die Einflüsse von transparenten Gegenständen und/oder Zusammensetzung der Umgebungsluft innerhalb des Überwachungsbereichs (3) berücksichtigt ist.

4. Verfahren nach einem der vorgenannten Ansprüche,
**dadurch gekennzeichnet,**
**dass** die Empfindlichkeit der Erfassung der empfangenen Lichtimpulse (7), die in einer Anzahl Einzelmessungen bei konstanter Zahl n empfangen sind, in Abhängigkeit von den Messwerten des Messzyklus, durch Anpassung der Komparator-Schwelle am Komparator (8) einstellbar bzw. regulierbar ist, derart, dass die Distanz (D) des jeweiligen Objektes (2) und/oder dessen Reflexionseigenschaften und/oder die Einflüsse von transparenten Gegenständen und/oder Zusammensetzung der Umgebungsluft innerhalb des Überwachungsbereichs (3) berücksichtigt ist.

## Claims

1. Method for determining a distance (D) between a measuring device (1) having an emitting diode (4) and a receiving diode (6) in the form of a SPAD diode, which comprises a plurality of individual APD diodes, and an object (2) by means of time-of-flight measurement,
the method comprising the following steps:
- emitting light pulses (5) by the emitting diode (4) into a monitoring area (3),
- receiving light pulses (7) reflected by the object (2) by the receiving diode (6),
- generating a histogram representing the progression of counted received reflected light pulses over time by means of a processor (24) of the measuring device (1), a plurality of measured values being read into the histogram, which are detected by the receiving diode (6) within a predefined measuring cycle,
**characterized by** the further method steps of
- emitting a multitude of light pulses (5) while constantly increasing the respective start time tz of the time measurement in a time-to-digital converter (10) according to the mathematical sequence tz = ts + n × Δt, where ts is the time of emission of the light pulse (5), n is a natural number starting at zero up to a predefined end value of at least 4, and Δt is the amount of the time delay by which the start time (tz) of the time measurement of the converter (10) is delayed in each case, wherein for each number n a plurality of light pulses (5) is emitted and received pulses (7) are detected and the time measurement result of the converter (10) is changed by the missing time amount n × Δt,
- storing the obtained measured values of such a measuring cycle in the histogram, and
- evaluating the histogram after completion of the measuring cycle depending on the distance (D) between the start time (ts) of the emitted light pulses (5) and their measuring times at the receiving diode (6), wherein the distance between the measuring device and an object represented in the histogram is calculated according to the formula c × t.

2. Method according to claim 1,
**characterized in that**
by evaluating the histogram, the distances (D) of several objects (2) present in the monitoring area (3) are determined, and the histogram generated by the method rates the measuring results for the near range lower.

3. Method according to claim 1,
**characterized in that**
the intensity of the emitted light pulses (5) at the emitting diode (4), which are emitted in a number of individual measurements at a constant number n, is adjustable or controllable depending on the measured values of the measuring cycle, in such a way that the distance (D) of the respective object (2) and/or its reflection properties and/or the influences of transparent objects and/or the composition of the ambient air within the monitoring area (3) are taken into account.

4. Method according to any one of the preceding claims,
**characterized in that**
the sensitivity of the detection of the received light pulses (7), which are received in a number of individual measurements at a constant number n, is adjustable or controllable depending on the measured values of the measuring cycle by adapting the comparator threshold at the comparator (8), in such a way that the distance (D) of the respective object (2) and/or its reflection properties and/or the influences of transparent objects and/or the composition of the ambient air within the monitoring area (3) are taken into account.

## Revendications

1. Procédé de détermination d'une distance (D) entre un dispositif de mesure (1) comprenant une diode émettrice (4) et une diode réceptrice (6) sous forme de diode SPAD, qui présente une pluralité de diodes APD individuelles, et un objet (2) au moyen d'une mesure du temps de vol de la lumière,
le procédé comprenant les étapes suivantes :
- émission d'impulsions lumineuses (5) par la diode émettrice (4) dans une zone de surveillance (3),
- réception d'impulsions lumineuses (7) réfléchies par l'objet (2) par la diode réceptrice (6),
- établissement d'un histogramme représentant l'évolution du nombre d'impulsions lumineuses réfléchies reçues en fonction du temps à l'aide d'un processeur (24) du dispositif de mesure (1), une pluralité de valeurs de mesure étant introduite dans l'histogramme, lesquelles sont détectées par la diode réceptrice (6) au cours d'un cycle de mesure prédéfini,
**caractérisé par** les étapes supplémentaires suivantes :
- émission d'une pluralité d'impulsions lumineuses (5) avec une augmentation constante du moment de départ tz respectif de la mesure du temps dans un convertisseur temps-numérique (10) selon la relation mathématique tz = ts + n × Δt, ts représentant le moment d'émission de l'impulsion lumineuse (5), n représentant un nombre naturel commençant à zéro jusqu'à une valeur finale prédéfinie d'au moins 4, et Δt représentant la valeur du retard temporel de laquelle le moment de départ (tz) de la mesure du temps du convertisseur (10) est retardé à chaque fois, une pluralité d'impulsions lumineuses (5) étant émise pour chaque valeur de n et des impulsions reçues (7) étant détectées, et le résultat de mesure temporelle du convertisseur (10) étant modifié du montant temporel manquant n × Δt,
- stockage dans l'histogramme des valeurs de mesure obtenues d'un tel cycle de mesure, et
- exploitation de l'histogramme après la fin du cycle de mesure en fonction de la distance (D) entre le moment de départ (ts) des impulsions lumineuses (5) émises et leurs moments de mesure à la diode réceptrice (6), la distance entre le dispositif de mesure et un objet représenté dans l'histogramme étant calculée selon la formule c × t.

2. Procédé selon la revendication 1,
**caractérisé en ce que**
par l'exploitation de l'histogramme, les distances (D) de plusieurs objets (2) présents dans la zone de surveillance (3) sont déterminées, et l'histogramme généré par le procédé pondère de manière moindre les résultats de mesure pour la zone proche.

3. Procédé selon la revendication 1,
**caractérisé en ce que**
l'intensité des impulsions lumineuses (5) émises par la diode émettrice (4), qui sont émises dans un nombre de mesures individuelles pour une valeur constante de n, est réglable ou régulable en fonction des valeurs de mesure du cycle de mesure, de telle sorte que la distance (D) de l'objet (2) concerné et/ou ses propriétés de réflexion et/ou l'influence d'objets transparents et/ou la composition de l'air ambiant dans la zone de surveillance (3) sont prises en compte.

4. Procédé selon l'une quelconque des revendications précédentes,
**caractérisé en ce que**
la sensibilité de la détection des impulsions lumineuses (7) reçues, qui sont reçues dans un nombre de mesures individuelles pour une valeur constante de n, est réglable ou régulable en fonction des valeurs de mesure du cycle de mesure par adaptation du seuil du comparateur au niveau du comparateur (8), de telle sorte que la distance (D) de l'objet (2) concerné et/ou ses propriétés de réflexion et/ou l'influence d'objets transparents et/ou la composition de l'air ambiant dans la zone de surveillance (3) sont prises en compte.
